# EUROPÄISCHE PATENTSCHRIFT

(11) **EP 3 170 996 B1**
(45) Veröffentlichungstag und Bekanntmachung des Hinweises auf die Patenterteilung: **02.01.2019**
(21) Anmeldenummer: 16182424.8
(22) Anmeldetag: 02.08.2016
(51) Int. Cl.: F01L 1/46, F01L 3/24, F02D 41/40, G01B 15/00, G01S 13/32, F02P 23/04, G01B 11/02, G01D 5/48, G01S 13/00

(54) **VORRICHTUNG ZUR BESTIMMUNG EINER VENTILSTELLUNG EINES EINLASSVENTILS EINER BRENNKRAFTMASCHINE**
DEVICE FOR DETERMINING A VALVE POSITION OF AN INLET VALVE OF A COMBUSTION ENGINE
DISPOSITIF DE DÉTERMINATION D'UNE POSITION DE SOUPAPE D'UN SOUPAPE D'ADMISSION D'UN MOTEUR À COMBUSTION INTERNE

(30) Priorität: 17.11.2015 DE 102015222626
(43) Veröffentlichungstag der Anmeldung: 24.05.2017
(73) Patentinhaber: ROBERT BOSCH GMBH, 70442 Stuttgart (DE)
(72) Erfinder: Wostradowski, Uwe, 71263 Weil Der Stadt-Merklingen (DE); Leidich, Stefan, 71277 Rutesheim (DE)

(56) Entgegenhaltungen:
- EP-A1- 1 099 043
- DE-A1- 19 621 531
- DE-A1- 19 712 374
- DE-A1-102006 052 790
- US-A- 4 468 956

## Beschreibung

### Stand der Technik

Heutige Vorschriften für das Betreiben von Brennkraftmaschinen sehen immer strengere Grenzwerte hinsichtlich bestimmter Bestandteile des Abgases, wie beispielsweise des Kohlenstoffdioxidgehalts, vor. Zu diesem Zweck ist eine möglichst effiziente Motorsteuerung erforderlich.

Zu diesem Zweck sind beispielsweise Sensoren an der Nockenwelle oder an der Kurbelwelle bekannt, die deren Drehstellung erfassen, um anhand der Drehstellung den abgasoptimalen Arbeitspunkt zu bestimmen.

Eine besondere Herausforderung dabei ist die Bestimmung der Öffnungs- und Schließzeiten eines Einlassventils bei Einsatz von variablen Ventilsteuerzeiten über Temperatur und Verschleiß der Brennkraftmaschine, insbesondere des Ventiltriebs, wie beispielsweise Zahnriemen oder Steuerkette. EP1099043 B1 offenbart die Positionserfassung eines Ventils mithilfe von Mikrowellen-Resonator-Wegsensoren.

Trotz der zahlreichen Vorteile der aus dem Stand der Technik bekannten Sensoren an der Nockenwelle und an der Kurbelwelle erlauben diese keine präzise Bestimmung der Stellung des Einlassventils, insbesondere dessen Öffnungs- und Schließzeitpunkte relativ zur Drehstellung der Kurbelwelle.

Die präzise Kenntnis insbesondere des Öffnungszeitpunkts des Einlassventils innerhalb 1° Kurbelwelle ist für den vorteilhaften Einsatz moderner Brennverfahren notwendig.

### Offenbarung der Erfindung

Es werden daher eine Vorrichtung und ein Verfahren zur Bestimmung einer Ventilstellung, insbesondere der Öffnungs- und Schließzeitpunkte, eines Einlassventils einer Brennkraftmaschine vorgeschlagen, welche die Nachteile bekannter Vorrichtungen und Verfahren zumindest weitgehend vermeiden und zudem eine präzise Bestimmung der Ventilstellung des Einlassventils erlauben.

Die erfindungsgemäße Vorrichtung zur Bestimmung einer Ventilstellung eines Einlassventils, insbesondere des Öffnungs- und Schließzeitpunkts, einer Brennkraftmaschine umfasst eine Koppelvorrichtung zum Einkoppeln von Mikrowellensignalen mit mindestens einer Frequenz in die Brennkraftmaschine, einen Empfänger zum Empfangen von Antwortsignalen der eingekoppelten Mikrowellensignale und eine Auswerteschaltung zum Ermitteln mindestens einer Kenngröße aus einem Vergleich der eingekoppelten Mikrowellensignale und der Antwortsignale, wobei basierend auf der Kenngröße die Ventilstellung des Einlassventils, insbesondere die Öffnungs- und Schließzeitpunkte, ermittelbar ist.

Unter der Ventilstellung ist im Rahmen der vorliegenden Erfindung eine relative Stellung des Ventils zu verstehen. Die relative Stellung kann dabei auf ein weiteres Bauteil bezogen sein, wie beispielsweise einen Ventilsitz. Die relative Stellung ist dann beispielsweise ein Abstand zu dem Ventilsitz. Die Ventilstellung gibt dabei auch einen Öffnungszeitpunkt und einen Schließzeitpunkt des Einlassventils wieder. So ist der Schließzeitpunkt derjenige Zeitpunkt, in dem das Ventil in einer geschlossenen Stellung ist und somit den Einlasskanal vollständig schließt. Das Einlassventil befindet sich zum Schließzeitpunkt in Anlage an dem Ventilsitz. Der Öffnungszeitpunkt ist dabei derjenige Zeitpunkt, zu dem das Einlassventil beginnt, den Einlasskanal zu öffnen bzw. freizugeben und sich somit vom Ventilsitz zu entfernen beginnt.

Dabei kann die Koppelvorrichtung zum Einkoppeln von Mikrowellensignalen über einen Frequenzbereich in die Brennkraftmaschine ausgebildet sein. Die Koppelvorrichtung zum Einkoppeln von Mikrowellensignalen kann für mindestens eine Eigenfrequenz bzw. Resonanzfrequenz des Einlasskanals ausgebildet sein. Die Kenngröße kann ein Reflexionsfaktor sein. Die Koppelvorrichtung kann einen Oszillator zum Erzeugen der Mikrowellensignale aufweisen, wobei die Koppelvorrichtung zum Ändern einer Frequenz der von dem Oszillator erzeugten Mikrowellensignale basierend auf einer Änderung der Kenngröße ausgebildet ist. Die Koppelvorrichtung ist zum Einkoppeln von Mikrowellensignalen in einen Übergang eines Ansaugstutzens in einen Einlasskanal des Zylinderkopfs der Brennkraftmaschine ausgebildet. Die Koppelvorrichtung kann überdies zum Montieren in dem Ansaugstutzen der Brennkraftmaschine ausgebildet sein.

Es wird weiterhin ein Verfahren zur Bestimmung einer Ventilstellung eines Einlassventils einer Brennkraftmaschine vorgeschlagen, wobei Mikrowellensignale unter Verwendung einer erfindungsgemäßen Vorrichtung in die Brennkraftmaschine eingekoppelt werden, wobei Antwortsignale unter Verwendung dieser Vorrichtung empfangen werden, wobei aus einem Vergleich der eingekoppelten Mikrowellensignale und der Antwortsignale mindestens eine Kenngröße ermittelt wird, wobei aus der Kenngröße auf die Ventilstellung des Einlassventils geschlossen wird.

Bei dem erfindungsgemäßen Verfahren kann ein Einspritzzeitpunkt und/oder ein Zündzeitpunkt für Kraftstoff basierend auf der Kenngröße verändert werden.

Unter Mikrowellensignalen sind im Rahmen der vorliegenden Erfindung allgemein elektromagnetische Hochfrequenzsignale zu verstehen, welche vorzugsweise in einem Frequenzbereich von oberhalb 1 GHz liegen, beispielsweise in einem Frequenzbereich von 10 GHz bis 30 GHz. Das Antwortsignal stellt sich im Rahmen der vorliegenden Erfindung allgemein als eine Reaktion auf eine Veränderung der Ventilstellung bei Einkoppelung des Signals im Einlasskanal dar. Beispielsweise kann es sich dabei allgemein um transmittierte, reflektierte, remittierte oder emittierte Signale oder um Kombinationen mehrerer Arten dieser Signale handeln. Alternativ oder zusätzlich können auch aus der Absorption, d. h. dem Fehlen von Signalanteilen, Rückschlüsse gezogen werden. Die Kenngröße kann dabei grundsätzlich eine beliebige Größe umfassen, welche aus den eingekoppelten Mikrowellensignalen und den Antwortsignalen gebildet wird. Dabei können beispielsweise auch lineare Kombinationen aus Amplituden und/oder Phasen der eingekoppelten Signale und entsprechenden Größen der Antwortsignale gebildet werden. Beispielsweise kann eine Differenz zwischen einer Amplitude der eingekoppelten Mikrowellenstrahlung und einer Amplitude der Antwortmikrowellenstrahlung und eine Differenz aus der Phase der eingekoppelten Mikrowellenstrahlung und der Phase der ausgekoppelten Mikrowellenstrahlung gebildet werden. Die Differenzen können dann jeweils die Kenngröße bilden und/oder einen Teil dieser Kenngröße. Entsprechend der Art des Vergleichs der eingekoppelten Signale und der Antwortsignale kann die Kenngröße beispielsweise mindestens eine der folgenden Kenngrößen umfassen: die Öffnungs- und Schließzeit, ein Reflexionsfaktor, insbesondere ein komplexer Reflexionsfaktor, eine Absorption, insbesondere eine komplexe Absorption, sowie eine Transmission, insbesondere eine komplexe Transmission. Unter komplexen Größen ist dabei jeweils eine Größe zu verstehen, welche eine Amplitude und eine Phase beinhaltet. Im Rahmen der vorliegenden Erfindung ist die Kenngröße insbesondere ein Reflexionsfaktor.

Optional werden bei dem vorgeschlagenen Verfahren insbesondere Mikrowellensignale über einen Frequenzbereich hinweg eingekoppelt. Dies bedeutet, dass Mikrowellensignale mit mindestens zwei Mikrowellenfrequenzen eingekoppelt werden. Diese zwei Mikrowellenfrequenzen können nacheinander und/oder gleichzeitig eingekoppelt werden.

### Kurze Beschreibung der Zeichnungen

Weitere optionale Einzelheiten und Merkmale der Erfindung ergeben sich aus der nachfolgenden Beschreibung bevorzugter Ausführungsbeispiele, welche in den Figuren schematisch dargestellt sind.

Es zeigen:
- Figur 1: eine schematische Darstellung einer erfindungsgemäßen Vorrichtung,
- Figur 2: einen vergrößerten Ausschnitt des Zylinderkopfs, wobei das Einlassventil geschlossen ist,
- Figur 3: einen vergrößerten Ausschnitt des Zylinderkopfs, wobei das Einlassventil geöffnet ist,
- Figur 4: eine Querschnittsansicht entlang der Linie A-A der Figur 2, wobei das Einlassventil geschlossen ist,
- Figur 5: eine Querschnittsansicht entlang der Linie B-B der Figur 3, wobei das Einlassventil geöffnet ist
- Figur 6: elektrische Feldverteilung in dem Einlasskanal bei geschlossenem Einlassventil,
- Figur 7: elektrische Feldverteilung in dem Einlasskanal bei geöffnetem Einlassventil,
- Figur 8: eine Darstellung eines Verlaufs einer Impedanz über verschiedene Frequenzen bei geschlossenem Einlassventil,
- Figur 9: eine Darstellung eines Verlaufs einer Impedanz über verschiedene Frequenzen bei geöffnetem Einlassventil,
- Figur 10: eine perspektivische Ansicht einer Vorrichtung gemäß einer ersten Ausführungsform als Bohrung im Zylinderkopf,
- Figur 11: eine perspektivische Ansicht einer Vorrichtung gemäß einer zweiten Ausführungsform als Dichtung zwischen Zylinderkopf und Ansaugstutzen oder -trakt,
- Figur 12: eine perspektivische Ansicht der Dichtung und
- Figur 13: ein Blockschaltbild einer Vorrichtung gemäß der vorliegenden Erfindung .

### Ausführungsformen der Erfindung

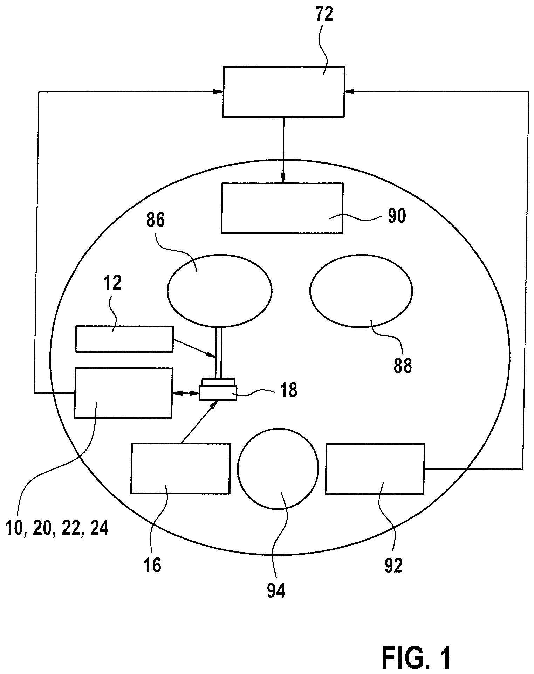

Figur 1 zeigt eine schematische Darstellung einer Vorrichtung 10 zur Bestimmung einer Ventilstellung eines Einlassventils 12 einer Brennkraftmaschine 14. Die Vorrichtung 10 ist an einem Einlasskanal 16 der Brennkraftmaschine 14 angeordnet und weist dabei dem Einlasskanal 16 zu. Genauer ist die Vorrichtung 10 an der Schnittstelle zwischen einem metallgegossenen Zylinderkopf 18 und dem Einlasskanal 16 angeordnet. Dies dient zum Vermeiden von hohen Temperaturen beim Betrieb der Brennkraftmaschine 14. In Figur 1 ist der Einlasskanal 16 beispielhaft fast vollständig geöffnet dargestellt, d.h. das Einlassventil 12 befindet sich in einer geöffneten Ventilstellung. Die Vorrichtung 10 weist eine Koppelvorrichtung 20 zum Einkoppeln von Mikrowellensignalen mit mindestens einer Frequenz in die Brennkraftmaschine 14, einen Empfänger 22 zum Empfangen von Antwortsignalen der eingekoppelten Mikrowellensignale und eine Auswerteschaltung 24 zum Ermitteln mindestens einer Kenngröße aus einem Vergleich der eingekoppelten Mikrowellensignale und der Antwortsignale auf. Die besondere Position der Vorrichtung 10 erlaubt die Verwendung von vergleichsweise günstigen siliziumbasierten Mikrowellenhalbleiterschaltungen für die Auswerteschaltung 24.

Die Erfindung basiert auf der Erkenntnis, dass der Einlasskanal 16 vor dem Einlassventil 12 in Verbindung mit dem Einlassventil 12 in geschlossenem Zustand eine geschlossene metallische Einheit darstellt, in die eine stehende elektromagnetische Hohlleiterwelle eingeprägt werden kann. Ein Öffnen des Einlassventils 12 verändert diese stehende Welle. Die Koppelvorrichtung 20 ist dabei zum Einkoppeln von Mikrowellensignalen über einen Frequenzbereich in die Brennkraftmaschine 14 ausgebildet. So kann die Koppelvorrichtung 20 zum Einkoppeln von Mikrowellensignalen mit mindestens einer Eigenfrequenz des Einlasskanals 16 in die Brennkraftmaschine 14 ausgebildet sein. Die Kenngröße kann dabei insbesondere eine Resonanzfrequenz sein.

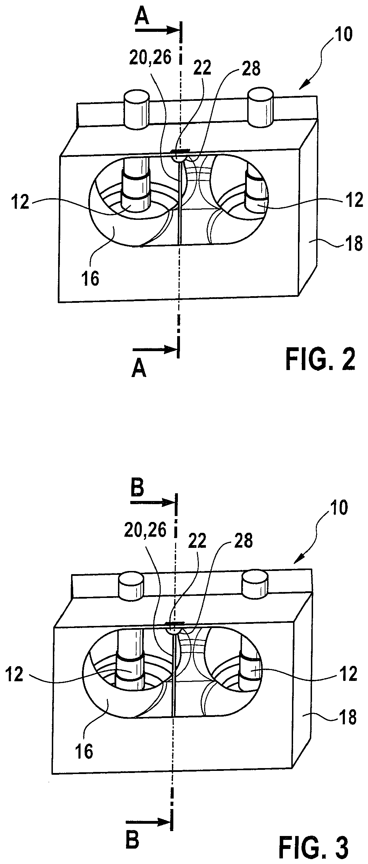

Figur 2 zeigt einen vergrößerten Ausschnitt des Zylinderkopfs 18 im Bereich des Einlasskanals 16, an dem eine Vorrichtung 10 gemäß der vorliegenden Erfindung angeordnet sein kann. Bei der Vorrichtung 10 der ersten Ausführungsform weist die Koppelvorrichtung 20 ein Koppelelement 26, wie beispielsweise einen Draht oder Leiter zum Einkoppeln der Mikrowellensignale auf. Der Empfänger 22 ist an einer Durchkontaktierung 28 angeordnet. Mittels der Durchkontaktierung 28 wird das Koppelelement 26 durch den Zylinderkopf 18 in den Einlasskanal 16 geführt. Das Koppelelement 26 erstreckt sich dabei senkrecht zu einer Längsachse des Einlasskanals 16. Figur 2 zeigt das Einlassventil 12 in einer geschlossenen Ventilstellung.

Figur 3 zeigt einen vergrößerten Ausschnitt des Zylinderkopfs 18 im Bereich des Einlasskanals 16, an dem die Vorrichtung 10 angeordnet sein kann. Figur 3 zeigt das Einlassventil 12 in einer offenen Ventilstellung.

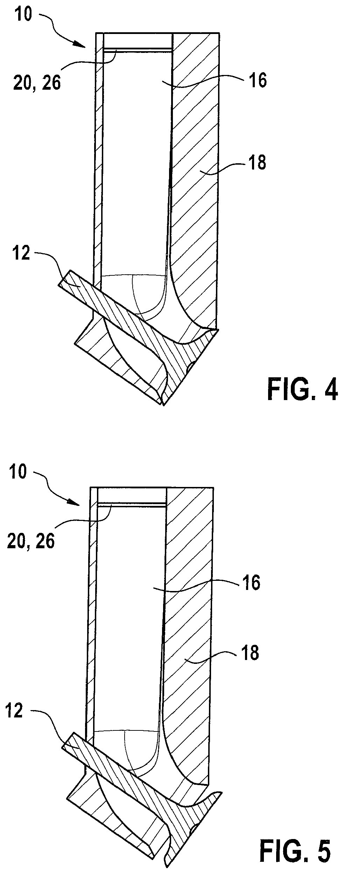

Figur 4 zeigt eine Querschnittsansicht entlang der Linie A-A der Figur 2. Zu erkennen ist die Position des Koppelelements 26 und dessen Erstreckung senkrecht zur Längsachse des Einlasskanals 16. Figur 4 zeigt das Einlassventil 12 in einer geschlossenen Ventilstellung. Mit anderen Worten befindet sich das Einlassventil 12 in Anlage an seinem Ventilsitz.

Figur 5 zeigt eine Querschnittsansicht entlang der Linie B-B der Figur 3. Figur 5 zeigt das Einlassventil 12 in einer offenen Ventilstellung. Beispielsweise ist das Einlassventil 12 2 mm geöffnet. Mit anderen Worten befindet sich das Einlassventil 12 in einem Abstand von 2 mm von seinem Ventilsitz.

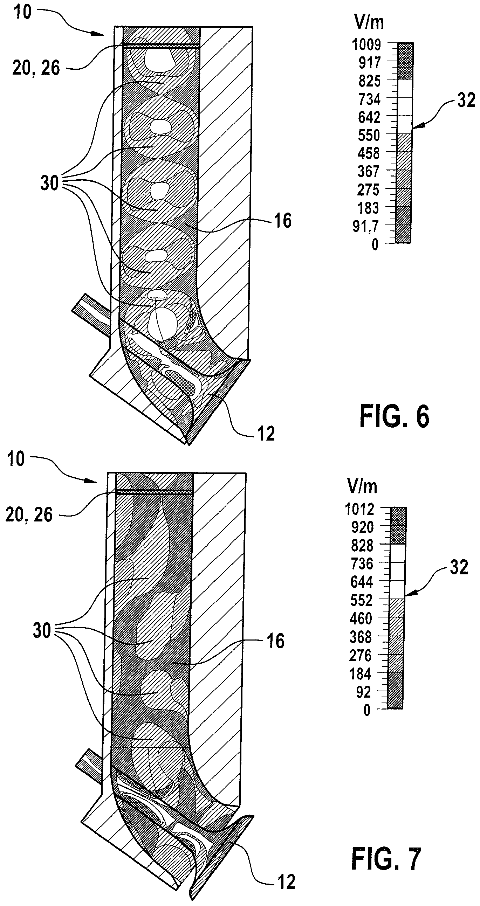

Figur 6 zeigt ein elektrisches Feld 30 in dem Einlasskanal 16 bei geschlossenem Einlassventil 12 gemäß Figur 4 und bei Einkoppelung von Mikrowellensignalen mit einer Frequenz von 12,3 GHz. Gezeigt ist dabei die Verteilung der elektrischen Feldstärke 32 angegeben in V/m. Die angegebenen Werte der elektrischen Feldstärke 32 sind dabei als beispielhaft anzusehen. Figur 6 zeigt dabei ein elektrisches Feld 30 mit einer Verteilung der elektrischen Feldstärke 32 in einem annähernd gleichmäßigen Muster.

Figur 7 zeigt das elektrische Feld 30 in dem Einlasskanal 16 bei offenem Einlassventil 12 gemäß Figur 5 und bei Einkoppelung von Mikrowellensignalen mit einer Frequenz von 12,3 GHz. Gezeigt ist dabei die Verteilung der elektrischen Feldstärke 32 angegeben in V/m. Die angegebenen Werte der elektrischen Feldstärke 32 sind dabei als beispielhaft anzusehen. Figur 7 zeigt, wie sich das elektrische Feld 30 bei Öffnung des Einlassventils 12 verändert. So weist das elektrische Feld 30 bei offenem Einlassventil 12 eine andere Verteilung der elektrischen Feldstärke 32 als bei geschlossenem Einlassventil gemäß Figur 6 auf. Basierend auf dieser Veränderung des elektrischen Felds 30 bzw. der Verteilung der elektrischen Feldstärke 32 kann somit auf eine Ventilstellung des Einlassventils 12 geschlossen werden.

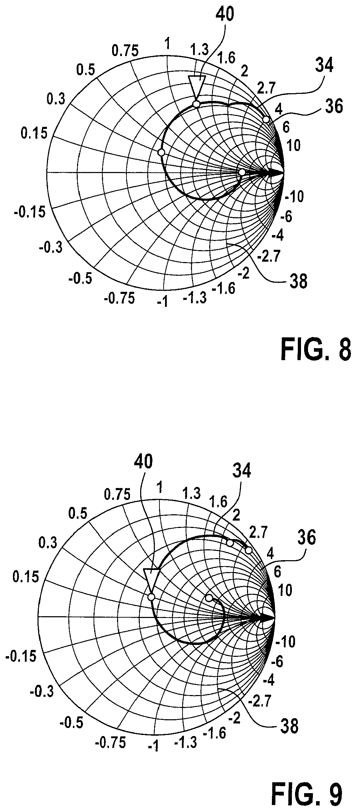

Figur 8 zeigt eine Darstellung eines Verlaufs einer Impedanz 34 über verschiedene Frequenzen bei geschlossenem Einlassventil 12. Die Impedanz 34 ist dabei in einem sogenannten Smith-Diagramm dargestellt mit einem Verlauf von Serien- und Parallelreaktanzen 36 sowie Ohmschen Widerständen 38. Figur 8 zeigt an einer Stelle 40 des Koppelelements 26 bei einer Einkoppelung von Mikrowellensignalen mit einer Frequenz von 12,3 GHz eine Impedanz mit einem Realanteil von 43,33 Ohm und einen Imaginäranteil von 13,40 Ohm.

Figur 9 zeigt eine Darstellung eines Verlaufs einer Impedanz 34 über verschiedene Frequenzen bei geöffnetem Einlassventil 12. Die Impedanz 34 ist dabei in einem sogenannten Smith-Diagramm dargestellt mit einem Verlauf von Serien- und Parallelreaktanzen 36 sowie Ohmschen Widerständen 38. Figur 9 zeigt an der Stelle 40 des Koppelelements 26 bei einer Einkoppelung von Mikrowellensignalen mit einer Frequenz von 12,3 GHz eine Impedanz mit einem Realanteil von 33,64 Ohm und einen Imaginäranteil von 63,92 Ohm. Daher ist in Figur 9 die Stelle 40 an einer anderen Position im Vergleich zu Figur 8 dargestellt.

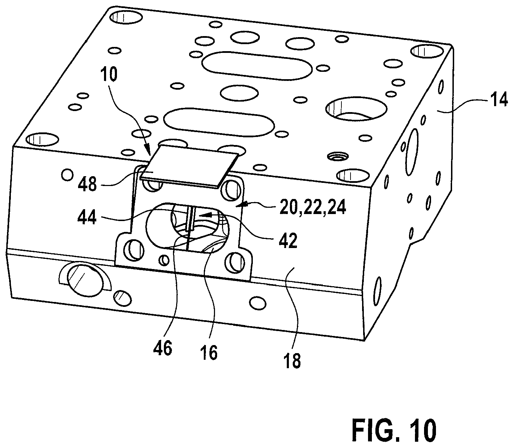

Figur 10 zeigt eine perspektivische Ansicht einer Vorrichtung 10 gemäß einer ersten Ausführungsform. Die Vorrichtung 10 kann als Bohrung durch den Zylinderkopf 18 ausgeführt sein, wie nachstehend ausführlicher beschrieben ist. Unter einer Ausführung als Bohrung ist in diesem Zusammenhang zu verstehen, dass mindestens ein Bauteil der Vorrichtung 10 sich von außen an dem Zylinderkop 18 durch eine Bohrung oder einen Durchgangskanal in das Innere des Einlasskanals 16 erstreckt. Bevorzugt ist dieses Bauteil zumindest das Koppelelement 26. Bei der Vorrichtung 10 der ersten Ausführungsform weist die Koppelvorrichtung 20 einen Koaxialleiter 42 als Koppelelement 26 zum Einkoppeln der Mikrowellensignale auf. Der Koaxialleiter 42 weist einen Außenleiter 44 und einen innerhalb des Außenleiters 44 angeordneten Innenleiter 46 auf. Der Empfänger 22 und die Auswerteschaltung 24 sind auf einer Leiterplatte 48 angeordnet. Die Leiterplatte 48 ist an dem Zylinderkopf 18 angebracht. Der Empfänger 22 ist dabei mit dem Koaxialleiter 42 verbunden, der durch den Zylinderkopf 18 in den Einlasskanal 16 geführt ist und sich in den Einlasskanal 16 hinein erstreckt. Der Koaxialleiter 42 erstreckt sich beispielsweise senkrecht zu einer Längsachse des Einlasskanals 16. Mittels des Koaxialleiters 42 kann die Einkoppelung und Auskoppelung von Mikrowellensignalen erfolgen. Dies kann durch eine entsprechende Kontaktierung des Innenleiters 46 und des Außenleiters 44 mit der Koppelvorrichtung 20 und dem Empfänger realisiert werden. Der Innenleiter 46 ist an den Einlasskanal 16 und an die Leiterplatte 48 leitfähig kontaktiert. Der Außenleiter 44 ist Teil des Zylinderkopfes 48, wie beispielsweise eine Bohrung durch den Zylinderkopf 18. Der Zylinderkopf 18 ist an die Leiterplatte 48 leitfähig kontaktiert.

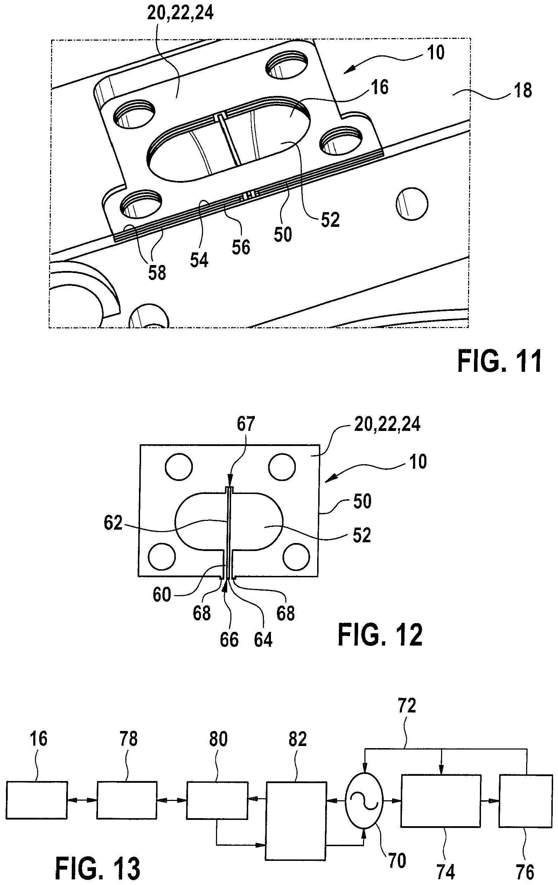

Figur 11 zeigt eine perspektivische Ansicht einer Vorrichtung 10 gemäß einer zweiten Ausführungsform. Nachstehend werden lediglich die Unterschiede zu den vorherigen Ausführungsformen beschrieben und gleiche Bauteile sind mit gleichen Bezugszeichen versehen. Die Vorrichtung 10 kann als Dichtung 50 zwischen dem Zylinderkopf 18 und einem nicht näher gezeigten Ansaugstutzen oder -trakt, der mit dem Einlasskanal 16 verbunden ist, ausgeführt sein. Bei der Vorrichtung 10 der zweiten Ausführungsform ist die Dichtung 50 um den Rand des Einlasskanals 12 angeordnet. Die Dichtung 50 ist aus einem elektrischen Material hergestellt. Beispielsweise ist die Dichtung 50 als Blech ausgebildet. Das Blech weist eine Materialstärke von 1 mm auf. Die Dichtung 50 weist eine Öffnung 52 auf. Die Öffnung 52 ist der Form und der Größe des Einlasskanals 12 angepasst, um den freien Querschnitt des Einlasskanals 12 nicht zu behindern oder zu verengen. Die Dichtung 50 ist auf gegenüberliegenden Seiten 54, 56 jeweils mit einer Beschichtung 58 versehen. Die Beschichtung 58 ist aus einem elektrisch isolierenden Material hergestellt, wie beispielsweise Gummi.

Figur 12 zeigt eine perspektivische Ansicht der Dichtung 50. Die Dichtung 50 ist nicht vollständig um die Öffnung 52 geschlossen, sondern weist eine Unterbrechung 60 auf. Durch diese Unterbrechung 60 erstreckt sich ein Draht 62 der Koppelvorrichtung 20 in die Öffnung 52 hinein und innerhalb der Öffnungsebene der Öffnung 52. Der Draht 62 ist zum Einkoppeln von Mikrowellensignalen ausgebildet und weist an einem ersten Ende 64 einen Anschluss 66 außerhalb der Öffnung 52 und der Unterbrechung 60 auf. An einem dem ersten Ende 64 gegenüberliegenden zweiten Ende 67 ist der Draht 62 mit der Dichtung 50 kurzgeschlossen, indem der Draht 62 mit der Dichtung 50 verbunden ist. Die Dichtung 50 weist weiterhin zwei Anschlüsse 68 auf, die zum Verbinden mit dem Empfänger 22 ausgebildet sind. Die Anschlüsse 68 sind angrenzend an das erste Ende 64 des Drahts 62 angeordnet. Auf diese Weise dient die Dichtung 50 als Masse für das durch den Draht 62 erzeugte elektrische Feld.

Figur 13 zeigt ein Blockschaltbild einer erfindungsgemäßen Vorrichtung 10. Die Vorrichtung 10 bzw. die Koppelvorrichtung 20 weist einen Oszillator 70 zum Erzeugen der Mikrowellensignale auf. Angedeutet ist auch der Einlasskanal 16. Angedeutet ist insbesondere der schematische Ablauf des Verfahrens. Der Oszillator 70 wird beispielsweise mit Strom von der Motorsteuerung 72 betrieben. Der Oszillator 70 ist mit einer Phasen-/Frequenzüberwachungseinheit 74 verbunden, die wiederum mit einer Schnittstelle 76 zu der Motorsteuerung 72 verbunden ist. Die Schnittstelle 76 ist wiederum mit dem Oszillator 70 verbunden. Dabei ist angegeben, dass es im Bereich der Einlasskanäle 16 zu einer Wellenerregung 78 kommt, deren Ausgangssignale wiederum mit einer bidirektionalen Koppelvorrichtung 80 verbunden sind. Das Ganze wiederum wird in ein Netzwerk 82 eingespeist, das sowohl mit der bidirektionalen Koppelvorrichtung 80 als auch mit dem Oszillator 70 verbunden ist.

Figur 1 zeigt schematisch die Anordnung der Vorrichtung 10 in der Brennkraftmaschine 14. So steht das Einlassventil 12 in funktionaler Verbindung mit einer Einlassnockenwelle 86. Die Einlassnockenwelle 86 wird ebenso wie eine Auslassnockenwelle 88, die in funktionaler Verbindung mit nicht näher gezeigten Auslassventilen steht, wiederum von Aktoren 90 gesteuert. Die Aktoren sind mit der Motorsteuerung 72 verbunden. Die Vorrichtung 10 liefert die Signale, die den Öffnungs- und Schließzeitpunkt des Einlassventils 12 angeben, an die Motorsteuerung 72. Die Vorrichtung 10 liefert insbesondere Informationen über einen zeitlichen Verlauf der Impedanz oder eine Resonanzfrequenz korreliert mit der Ventilstellung des Einlassventils 12. Die Motorsteuerung 72 empfängt weiterhin Signale eines Kurbelwellenphasengebers 92 einer Kurbelwelle 94. Der Kurbelwellenphasengeber 92 liefert insbesondere ein Zeitsignal der Stellung der Kurbelwelle 94. Die Signale der Vorrichtung 10 können dabei in Form eines analogen oder bevorzugt eines digitalen Signals der Motorsteuerung 72 zugeführt werden. Die Signale der Vorrichtung 10 stellen die momentane Frequenz des Oszillators 70 dar, beispielsweise in Form eines Bruchs, der von der Phasen-/Frequenzüberwachungseinheit 74 geliefert wird. Zur Korrektur des Einspritz- und/oder Zündzeitpunkts können diese Signale verwendet werden. Der ideale Zeitpunkt zum Öffnen und Schließen des Einlassventils 12 wird in der Motorsteuerungseinheit 72 als ein fester Wert in Form eines Winkelgrads der Kurbelwelle 94 gespeichert. Bei einer Langzeitüberwachung kann aus den über die Zeit aufgezeichneten Werten in Form von Grad Kurbelwelle ein Verschleiß des Zahnriemens festgestellt werden, da sich diese mit der Zeit verändern.

## Patentansprüche

1. Vorrichtung (10) zur Bestimmung einer Ventilstellung eines Einlassventils (12) einer Brennkraftmaschine (14), umfassend eine Koppelvorrichtung (20) zum Einkoppeln von Mikrowellensignalen mit mindestens einer Frequenz in die Brennkraftmaschine (14), einen Empfänger (22) zum Empfangen von Antwortsignalen der eingekoppelten Mikrowellensignale und eine Auswerteschaltung (24) zum Ermitteln mindestens einer Kenngröße aus einem Vergleich der eingekoppelten Mikrowellensignale und der Antwortsignale, **dadurch gekennzeichnet, dass** die Koppelvorrichtung (20) zum Einkoppeln von Mikrowellensignalen in einem Übergang eines Ansaugstutzens in einem Zylinderkopf (18) der Brennkraftmaschine (14) ausgebildet ist.

2. Vorrichtung (10) nach dem vorhergehenden Anspruch, wobei die Koppelvorrichtung (20) zum Einkoppeln von Mikrowellensignalen über einen Frequenzbereich in die Brennkraftmaschine (14) ausgebildet ist.

3. Vorrichtung (10) nach dem vorhergehenden Anspruch, wobei die Koppelvorrichtung (20) zum Einkoppeln von Mikrowellensignalen mit mindestens einer Eigenfrequenz der Brennkraftmaschine (14) in die Brennkraftmaschine (14) ausgebildet ist.

4. Vorrichtung (10) nach einem der vorhergehenden Ansprüche, wobei die Kenngröße ein Reflexionsfaktor ist.

5. Vorrichtung (10) nach einem der vorhergehenden Ansprüche, wobei die Auswerteschaltung (24) zum Ermitteln der Kenngröße für mehrere Schwingungsmodi ausgebildet ist.

6. Vorrichtung (10) nach einem der vorhergehenden Ansprüche, wobei die Koppelvorrichtung (20) einen Oszillator (42) zum Erzeugen der Mikrowellensignale aufweist, wobei die Koppelvorrichtung (20) zum Ändern einer Frequenz der von dem Oszillator (42) erzeugten Mikrowellensignale basierend auf einer Änderung der Kenngröße ausgebildet ist.

7. Vorrichtung (10) nach Anspruch 1, wobei die Vorrichtung (10) zum Montieren in dem Ansaugstutzen der Brennkraftmaschine (14) ausgebildet ist.

8. Verfahren zur Bestimmung einer Ventilstellung eines Einlassventils (12) einer Brennkraftmaschine (14), wobei Mikrowellensignale unter Verwendung einer Vorrichtung (10) nach einem der vorhergehenden Ansprüche in die Brennkraftmaschine (14) eingekoppelt werden, wobei die Mikrowellensignale mittels einer Koppelvorrichtung (20) in einem Übergang eines Ansaugstutzens in einem Zylinderkopf (18) der Brennkraftmaschine (14) eingekoppelt werden, wobei Antwortsignale unter Verwendung der Vorrichtung (10) empfangen werden, wobei aus einem Vergleich der eingekoppelten Mikrowellensignale und der Antwortsignale mindestens eine Kenngröße ermittelt wird, wobei aus der Kenngröße auf die Ventilstellung des Einlassventils (12) geschlossen wird.

9. Verfahren nach dem vorhergehenden Anspruch, wobei ein Einspritzzeitpunkt und/oder ein Zündzeitpunkt für Kraftstoff basierend auf der Kenngröße (28) verändert wird.

## Claims

1. Device (10) for determining a valve position of an inlet valve (12) of a combustion engine (14), comprising a coupling device (20) for inputting microwave signals with at least one frequency into the combustion engine (14), a receiver (22) for receiving response signals of the input microwave signals and an evaluation circuit (24) for determining at least one characteristic variable from a comparison of the input microwave signals and the response signals **characterized in that** the coupling device (20) for inputting microwave signals is formed at a junction of an intake manifold with a cylinder head (18) of the combustion engine (14).

2. Device (10) according to the preceding claim, wherein the coupling device (20) is designed to input microwave signals into the combustion engine (14) over a frequency range.

3. Device (10) according to the preceding claim, wherein the coupling device (20) is designed to input microwave signals with at least one natural frequency of the combustion engine (14) into the combustion engine (14).

4. Device (10) according to one of the preceding claims, wherein the characteristic variable is a reflection factor.

5. Device (10) according to one of the preceding claims, wherein the valuation circuit (24) is designed to determine the characteristic variable for a plurality of oscillation modes.

6. Device (10) according to one of the preceding claims, wherein the coupling device (20) has an oscillator (42) for generating the microwave signals, wherein the coupling device (20) is designed to change a frequency of the microwave signals generated by the oscillator (42), on the basis of the change in the characteristic variable.

7. Device (10) according to Claim 1, wherein the device (10) is designed for mounting in the intake manifold of the combustion engine (14).

8. Method for determining a valve position of an inlet valve (12) of a combustion engine (14), wherein microwave signals are input into the combustion engine (14) using a device (10) according to one of the preceding claims, wherein the microwave signals are input at a junction of an intake manifold in a cylinder head (18) of the combustion engine (14) by means of a coupling device (20), wherein response signals are received using the device (10), wherein at least one characteristic variable is determined from a comparison of the input microwave signals and the response signals, wherein the valve position of the inlet valve (12) is inferred from the characteristic variable.

9. Method according to the preceding claim, wherein an injection time and/or an ignition time for fuel is changed on the basis of the characteristic variable (28) .

## Revendications

1. Dispositif (10) de détermination d'une position de soupape d'une soupape d'admission (12) d'un moteur à combustion interne (14), comprenant un dispositif de couplage (20) destiné à coupler en entrée des signaux micro-ondes ayant au moins une fréquence dans le moteur à combustion interne (14), un récepteur (22) destiné à recevoir des signaux de réponse aux signaux micro-ondes couplés en entrée et un circuit d'exploitation (24) destiné à déterminer au moins une grandeur caractéristique à partir d'une comparaison entre les signaux micro-ondes couplés en entrée et les signaux de réponse, **caractérisé en ce que** le dispositif de couplage (20) destiné à coupler en entrée des signaux micro-ondes est réalisé dans une transition d'une tubulure d'admission dans une culasse (18) du moteur à combustion interne (14).

2. Dispositif (10) selon la revendication précédente, dans lequel le dispositif de couplage (20) est conçu pour coupler en entrée des signaux micro-ondes dans le moteur à combustion interne (14) sur une certaine plage de fréquences.

3. Dispositif (10) selon la revendication précédente, dans lequel le dispositif de couplage (20) est conçu pour coupler en entrée dans le moteur à combustion interne (14) des signaux micro-ondes avec au moins une fréquence propre du moteur à combustion interne (14).

4. Dispositif (10) selon l'une des revendications précédentes, dans lequel la grandeur caractéristique est un coefficient de réflexion.

5. Dispositif (10) selon l'une des revendications précédentes, dans lequel le circuit d'exploitation (24) est conçu pour déterminer la grandeur caractéristique pour plusieurs modes de vibration.

6. Dispositif (10) selon l'une des revendications précédentes, dans lequel le dispositif de couplage (20) comporte un oscillateur (42) destiné à générer les signaux micro-ondes, dans lequel le dispositif de couplage (20) est conçu pour modifier une fréquence des signaux micro-ondes générés par l'oscillateur (42) sur la base d'une modification de la grandeur caractéristique.

7. Dispositif (10) selon la revendication 1, dans lequel le dispositif (10) est conçu pour être monté dans la tubulure d'admission du moteur à combustion interne (14) .

8. Procédé de détermination d'une position d'une soupape d'admission (12) d'un moteur à combustion interne (14), dans lequel des signaux micro-ondes sont couplés en entrée dans le moteur à combustion interne (14) au moyen d'un dispositif (10) selon l'une des revendications précédentes, dans lequel les signaux micro-ondes sont couplés en entrée au moyen d'un dispositif de couplage (20) dans une transition d'une tubulure d'admission dans une culasse (18) du moteur à combustion interne (14), dans lequel des signaux de réponse sont reçus par utilisation du dispositif (10), dans lequel au moins une grandeur caractéristique est déterminée à partir d'une comparaison entre les signaux micro-ondes couplés en entrée et les signaux de réponse, dans lequel la position de soupape de la soupape d'admission (12) est déduite de la grandeur caractéristique.

9. Procédé selon la revendication précédente, dans lequel un instant d'injection et/ou un instant d'allumage du carburant est modifié sur la base de la grandeur caractéristique (28).
